# EUROPEAN PATENT APPLICATION

(11) **EP 1 125 514 A2**
(43) Date of publication of application: **22.08.2001**
(21) Application number: 01830102.8
(22) Date of filing: 15.02.2001
(51) Int. Cl.: A43D 27/02, A43D 87/00, A43D 119/00, B29C 37/02

(54) **Apparatus for the automatic trimming of plastic shoe soles and relevant trimming method**

(30) Priority: 18.02.2000 IT FI000036
(71) Applicant: Autec di Geri Ing. Fabrizio & C.s.a.s, 56040 cenaia, Crespina ( Pisa ) (IT)
(72) Inventor: Geri, Fabrizio, 56038 Ponsacco ( Pisa ) (IT)
(74) Representative: Bardini, Marco Luigi

(57) **Abstract**

An apparatus for the automatic trimming of shoe soles made of plastic material, comprising a trimming machine (12,36) which includes a support member, along which the sole edge to be trimmed is made to slide, and a cutting tool reciprocating to and from the support in a substantially radial direction with respect thereto. The apparatus comprises means for transporting the soles (3,29,30,33) one by one toward an imaging and clamping station (5,34) for said soles, imaging means (6,37,38) for detecting the disposition of each of the soles in the imaging station and transmitting the data relevant to the disposition of the soles to a data processing unit (14,39), sole clamping means (10,35) operated each time by an enabling signal coming from said processing unit as a function of the sole disposition within said imaging and clamping station. The sole clamping means are capable of transferring the sole to an operative position with respect to the trimming machine and comprise a clamping tool (11) for performing a 360° rotation in the operating position around its axis according to a trajectory defined on the basis of a sole reference profile so as to slide the overall sole edge to be trimmed under the cutting tool of the trimming machine.

## Description

The present invention relates to an apparatus for the automatic trimming of shoes soles made of plastic material. The invention also relates to a method for trimming plastic shoe soles.

Plastic shoe soles, for example PVC or polyurethane soles, are produced by cast molding in suitable molds arranged on a turnable mold-holding table of large dimensions (up to 6 meters diameter). Once cooled and extracted from the mold, the sole is in its final shape except for the presence of a perimetrical fin formed between the contacting edges of the mold and the countermold. More precisely, the upper face of the sole is formed with a protruding perimetrical edge from which a more or less irregular fin extends which must be removed through trimming. In some cases, for example when a mold with intermediate ring is used, two fins to be removed may be present.

Trimming is carried out through a specific equipment comprising a cutting tool in the shape of a blade alternately moving to and from a support wheel onto which the sole edge to be trimmed is leant. In practice, the edge to be trimmed is leant against a rounded edge of the wheel in such a way that the fin is interposed between the rounded edge and the blade and then the sole edge is caused to slide under the blade until the fin is completely removed.

The operation requires from six to fifteen seconds according to the operator skill, whereby, taking into account of the high productivity of the molding units (up to one sole per second) , a lot of labor is requested for the trimming step. This work is generally entrusted to outworkers even because the molding units operate continuously, i.e. on three turns, while the trimming machines operate on one or two turns. As a consequence, at the beginning of the morning turn, there are large stocks of soles to be trimmed.

The job entrusted to out-workers is, therefore, a need even if it gives rise to other organization and practical problems, which finally result in a considerable reduction of productivity of the molding units. It is sufficient to consider that each sole stock must be counted when it is delivered to the out-worker and when it is handed back and a even limited loss must be always taken into account. Therefore, it is clear that there is a need to automatize the sole trimming operation, *inter alia,* to the end of releasing human resources to be directed to activities that are deemed more useful from a production standpoint.

It is an object of the present invention to provide an apparatus for carrying out the trimming of the plastic shoe soles in a completely automatic way.

Essentially, the apparatus for allowing the automatic trimming of the shoe soles is arranged downstream of a sole molding unit and comprises a trimming machine and its features are those set forth in the characterizing portion of claim 1. In a particularly preferred embodiment of the invention, designed to be applied to the existing sole molding plants, which comprise an in-bulk storage of the soles, without involving any modification to these plants, the apparatus of the invention comprises also a single sole feeding device for feeding the soles after one another to the trimming machine.

Further features and advantages of the apparatus for carrying out the trimming of the plastic shoe sole according to the invention, will become more apparent from the following description of a non-limiting, exemplifying embodiment made with reference to the attached drawings wherein:
- Figure 1 is a schematic plan view of the apparatus of the invention in a first plant lay-out;
- Figure 2 is a perspective view of a clamping tool;
- Figure 3 is a perspective view of the clamping tool from another visual angle;
- Figures 4 and 5 show the clamping tool of figures 2 and 3 in two respective working positions;
- Figure 6 schematically shows a device for feeding the soles after one another;
- Figure 7 is a schematic plan view of the apparatus of the invention in a second plant lay-out;
- Figure 8 is a block perspective view of the apparatus of figure 7.

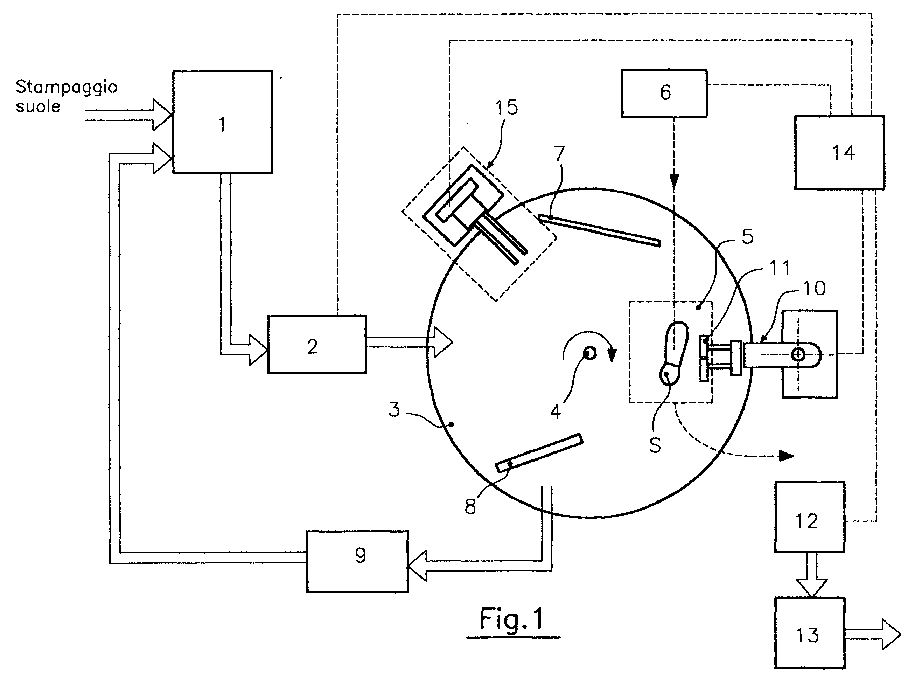

With reference to figure 1, 1 denotes an in-bulk sole storage unit, the soles coming from a molding plant and 2 a single sole feeding device which draws out the soles from storage unit 1 and feed them after one another to sole transport means formed by a table 3 intermittently rotating around a vertical axis 4 connected to a motor located under the table and not shown. By rotating intermittently table 3 causes the soles fed thereon to pass through an imaging and clamping area 5 situated about at the diametrically opposed part to the sole feeding area. A photogrammetic type imaging unit 6, for example an optical detector such as a telecamera, is positioned over the imaging area 5 to detect the disposition of the soles which in turn come to pass through said area, as will be described in more detail hereafter. In order to make the imaging easier, turning table 3 is made of a transparent material and a light source, not shown, is mounted below it in correspondence to the imaging area 5. Light source is screened by an opalescent panel providing a backlighting of the sole to the imaging unit 6, enhancing its outline apart from its color.

Above turning table 3 there extends a first guide rod 7 located upstream of imaging area 5 in the rotation direction of the turning table, for directing the soles discharged thereon toward the imaging area. A second guide 8 located downstream of area 5 directs toward a recirculation and discharge area 9 those soles which, as will be said hereinafter, would not be arranged in a position fit for being clamped.

A robotic arm 10 operates in correspondence to imaging and clamping area 5. Arm 10 is equipped with a clamping tool 11 for the soles which, after one another, passes through imaging and clamping area 5, as well as to transfer each sole to a trimming machine 12, of the conventional type and to carry out a 360° rotation of the sole with respect to the machine to remove the fin extending along the edge of the sole along a complex path defined as will be explained hereinafter. At the end of the trimming operation each sole is discharged in a finished soles storage station 13.

A data control and processing unit 14 manages the operation of imaging unit 6, robotic arm 10, trimming machine 12, as well as the intermitted movement of turning table 3 synchronously with unit 6.

Imaging unit 6 detects a disposition of sole S at imaging area 5 with respect to a prefixed reference system and determines whether the sole turns its bottom or its top upwards. In the first case processing unit 14 enable robotic arm 10 to clamp the sole, while in the second case robotic arm 10 remains inoperative and, due to the rotation of turning table 3, the sole is conveyed toward recirculation and discharge section 9.

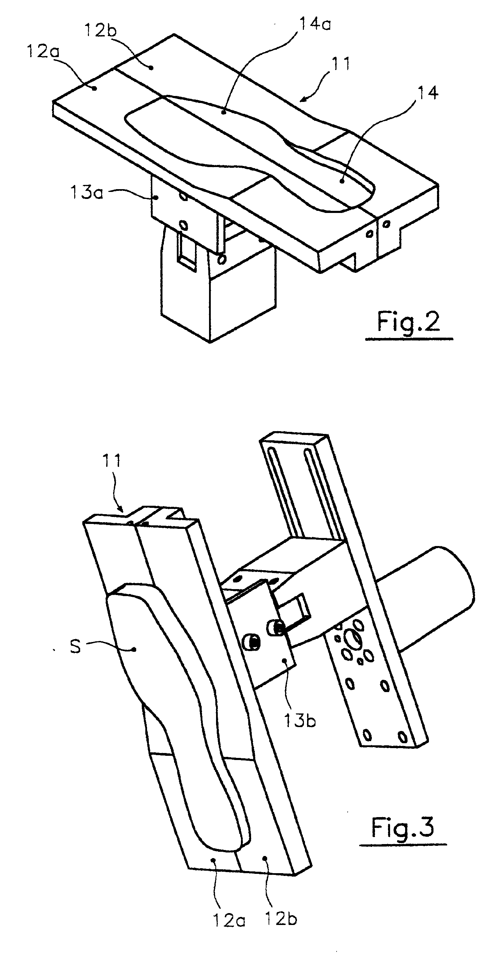

Robotic arm 10 is of the substantially conventional type. For example it can be used the industrial robot MOTOMAN-SK16X with XRC control over six controlled axes, wrist load of 16 Kg and positioning precision of 0,1 mm. The arm ends with a clamping tool 11 suitably designed to take the soles grasping them along the side edge of their heel. To this end, as shown in figure 2 and 3, tool 11 is formed by two plates 12a, 12b integral to respective support arms 13a, 13b, perpendicular to the plates. Plates 12a and 12b are coplanar and can translate with respect to each other along the common lying plane in such a way that they can be mutually opened, i.e. they can be displaced to and from a position of mutual contact. In this position plates 12a and 12b define a seat 14 on their active face, i.e. the face opposite to that connected to arms 13a and 13b, having a shape corresponding to that of the heel of a sole. The deepness of seat 14 decreases starting from the rear end of the heel and disappears in a substantially intermediate position. With tool 11 so shaped it is possible to clamp soles of different size and shape within relatively wide ranges without the need of replacing plates 12a, 12b on varying size and shape. The decreasing deepness of seat 14 also causes the front portion of the sole abut against the surface of plates 12a, 12b in an area indicated at 14a in figure 2. In this way, the sole position is kept firmly defined during machining with the trimming machine.

In order to enable robotic arm 10 to carry out the clamping of each sole and the operating movement at the trimming machine, it is necessary to start reconstructing the profile of the sole to be handled. In the specific case, through measurements carried out in two different positions (plan and side position) of a reference sole of a certain type (i.e. of a certain size and shape), a reference profile is reconstructed for this type of sole. The reference profile is used to determine the trajectory which tool 11 must follow when trimming any sole with similar feature to those of the referenced sole.

In order to reconstruct the reference profile of the plan view of the sole (a similar procedure is followed for the side view of the sole), through the photogrammetic unit the position of N points of the contour of the reference sole is acquired. The points are then divided into a certain number of subgroups, each containing a minimum number of points. The subgroup division corresponds to subdividing the profile of the sole into a certain number of lengths. Since number N of points acquired for each sole is variable, the number of points forming the subgroups must be consequently adapted through a suitable algorithm. A profile approximation algorithm based on Bezier curves is applied to the points of each subgroup. Then the tangent to each point for the profile approximated in this way is calculated. Moreover, in order to overcome the problem of the irregularity of the tangent at the connection point of different length of the approximated sole profile, the points forming each group are varied and the tangents are calculated again to obtain an average value for the tangents to each point.

More particularly, matrix 2xN containing X, Y coordinates of the points of the profile is partitioned into blocks to construct partial Bezier curves which will form the basis for the subsequent calculation of the tangent. The number N of the points considered is, in general, variable and it is not an integer multiple of a number of points for a given block. Therefore, the block dimension must be calculated automatically by the software on the basis of the following additional conditions:
- the dimension of the last block can not be lower than a certain number of points, because otherwise the calculated tangent would be unreliable due to an excessive closeness to the profile irregularities;
- a solution must be guaranteed, or, in other words, the partitioning algorithm must give a correct solution for any number of inlet points (up to a prefixed maximum).

A Bezier curve is constructed for each block on which the tangent unit vectors are calculated. Having defined in the above-mentioned way the dimensions of partitioned blocks regular tangents, yet close to the real curve, are thus obtained. However, a tangent discontinuity at the connection of the blocks is still present, because the coincidence of the end tangents of the adjacent Bezier curves is not guaranteed *a priori.*

In order to overcome the above inconvenience, the whole process is carried out a number of times equal to the number of points of each partition on points moving forward one position each time. At the end of the process the average value of the results is calculated. In this way the discontinuity at the end points is absorbed by the continuity of the tangents calculated when these end points are in an intermediate position within a Bezier curve.

The result of all these operations is a calculated tangent closely approximating the tangent to the real profile, but without being affected by the errors of the physical sole and the acquisition process.

Once the cartesian coordinates and the respective tangent are determined at each point of the profile of the sole edge, by means of an algorithm of known type for a person skilled in the art these data are transformed into internal control parameters for the robotic arm, by means of which it is possible to move clamping tool 11 with the same sequence of movements that till now was performed by the operator's hand to slide the whole sole edge under the blade of the trimming machine. In the practice, the trajectory defined in this way is the resultant of a 360° rotary movement around an axis perpendicular to the operating plane of the blade combined with an angular displacement of the mean plane of the sole to and from the blade.

Therefore, the robotic arm is driven according to a trajectory defined on the basis of the reconstructed reference profile. In particular, the position and orientation the robotic arm must assume with respect to the blade for trimming in a point are defined for each point of the sole on the basis of the reference profile. The overall trajectory obtained in this way is then further improved by means of an optimization algorithm of the known type.

A reference profile for each size can be reconstructed for the same type of sole or, preferably and in a less expensive way, the reference profile calculated for one size can be transformed into the profile corresponding to other sizes by means of known analyticalnumerical processes.

In order to allow the clamping of the sole passing through the imaging area 5, the imaging unit 6 determines its center of mass and the main inertial axis. The position of each sole is assessed in an absolute reference system integral to the camera. Since the relevant position of the camera with respect to the robotic arm is known, the position of the sole with respect to the robotic arm can be calculated as well. Therefore control unit 12 can drive arm 10 by locating it in the suitable position to grasp the sole. This position is defined by three spatial coordinates and three angular coordinates transmitted to the arm by the imaging unit.

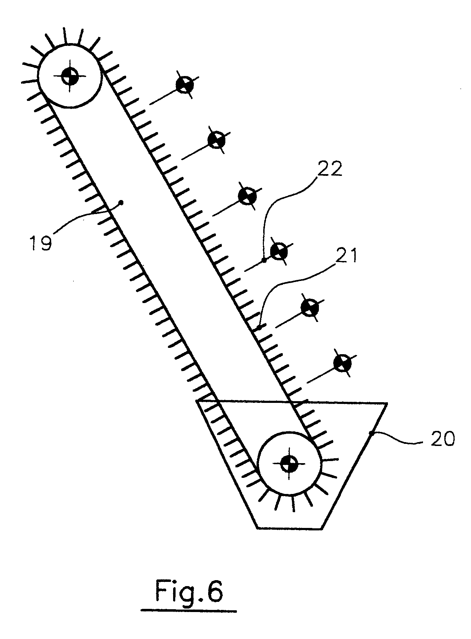

Device 2 for feeding the soles on turning table 3 after one another, schematically shown in figure 6, comprises in the present embodiment of the invention, an inclined conveyor belt 19 extending up from a feeding hopper 20 and comprising a row of steps 21 integral to the belt and delimiting a succession of seats for containing no more than one sole, said steps cooperating with diaphragms 22 integral to the fixed support structure of the belt. Diaphragms 22 are hinged to the fixed structure and their possibility of rotation is elastically opposed so that they form traps for progressively reducing the number of soles in each seat up to only one in the last length of the conveyor, to be discharged on turning table 3 through a chute, not shown.

Moreover, in a possible variation of the invention, instead of discharging from turning table 3 and recirculating the soles not properly positioned for the clamping, overturning pliers can be provided upstream of robotic arm 10, for correctly positioning the sole after a backward angular displacement of turnable table 3. After a further angular displacement of the same amplitude, but in the opposite direction of turning table 3, the sole is returned to the imaging and clamping area 5 in the proper clamping position.

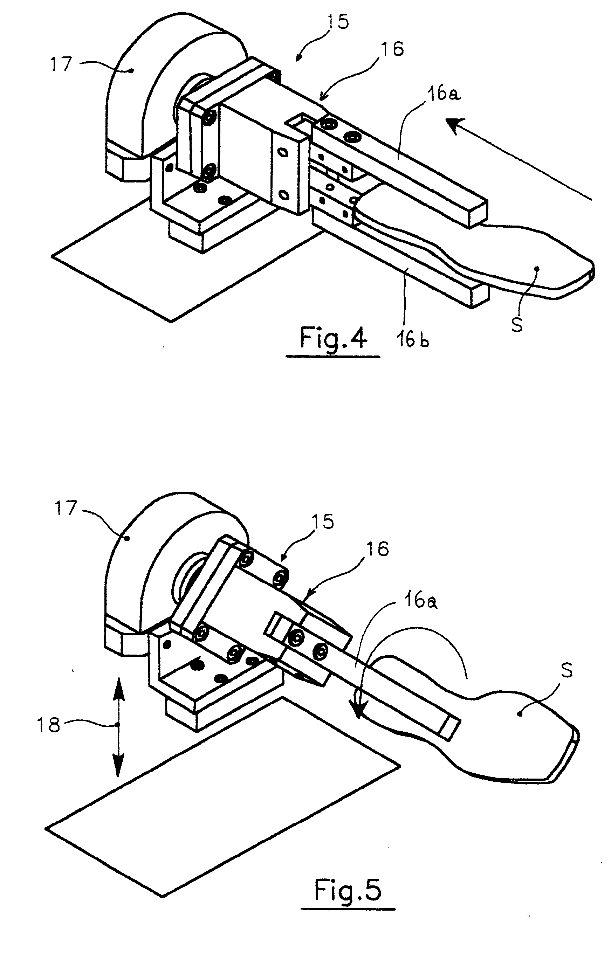

In particular, the position of the overturning pliers is shown in figure 1 indicated at 15 and in a dot-and-dashed line block. Clearly, if the overturning pliers are used, there is no provision for discharge guide 8 and recirculation unit 9. As shown in figures 4 and 5, overturning pliers 15 are formed by pliers member 16 with a pair of radial arms 16a, b mounted on a rotating pneumatic actuator 17 fit for performing a 180° rotation. Rotary actuator 17 is integral to a linear actuator, not shown, for performing a translatory movement in the vertical direction according to arrow 18 of figure 5. The soles discarded by the imaging system 6 are carried by table 3 rotating in the opposite direction between arms 16a, b of pliers member 16, with the help of guide rod 7, and grasped thereby (Fig. 4). At this point the linear actuator lifts rotary actuator 17 and pliers member 16 which, in this way, is free to rotate turning sole S in the proper position. After the sole is overturned the linear actuator pull the pliers member downward and the sole is released on turning table 3 correctly positioned.

This solution is deemed to be preferred to avoid the high number (50% average) of soles which must be recirculated with the above described solution.

There is substantially no dead time, as the overturning of an improperly positioned sole can be carried out while the robotic arm trims another sole.

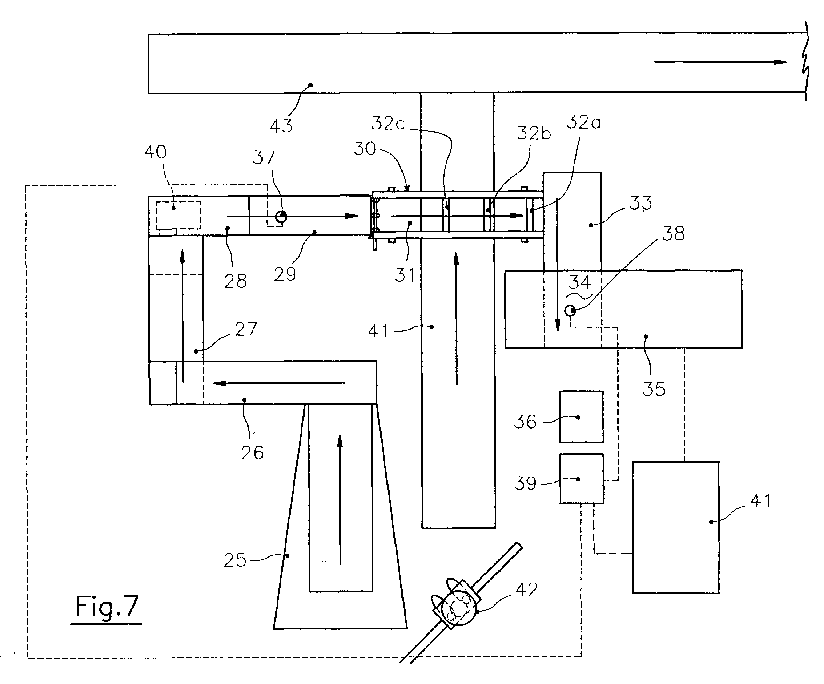

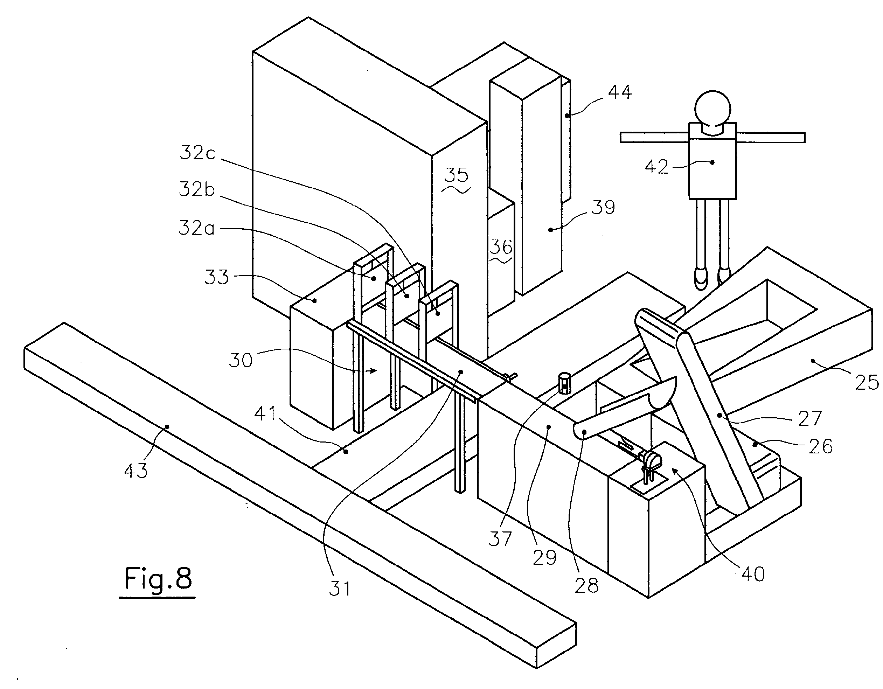

A second embodiment of the invention is shown in figures 7 and 8, wherein the turnable table for transporting the soles is replaced by a series of linear conveyors, for example belt conveyors. The soles coming from a molding unit, not shown, are collected into an upper 25 which feeds them on a first belt conveyor 26, which moves at an higher speed than that of the upper belt and thus performs a preliminary reduction into alignment of the soles. From the latter the soles are fed to an elevator 27 for reducing them into alignment (similar to inclined conveyor belt 19 of figure 6) and, through a chute 28, are discharged on a second conveyor belt 29 one by one to be fed to a sole buffer unit 30. Buffer unit 30 comprises a third conveyor belt 31 and at least three walls 32a, b, c movable perpendicularly to belt 31 and arranged above it in such a way to define at least three separate sections on belt 31 for containing an equal number of soles. These soles are awaiting to be fed to a forth conveyor belt 33 which transfers them to an imaging and clamping unit 34, wherein, as in the first embodiment of the invention, the soles are clamped by a robotic arm 35, equipped with a clamping tool 11 (shown in figures 2 and 3) and controlled by a data processing unit 44 for the acquisition of the sole profile and transferring the sole to a trimming machine 36 of the conventional type.

The apparatus comprises two separate imaging stations 37 and 38, both driven by a same data processing unit 39. Imaging station 37 is formed by a camera which detects if the sole passing under it is properly positioned to be clamped or not, i.e. whether its heel is turned upwardly or not. If the sole position is not proper, second belt conveyor 29 reverses the motion to convey the sole towards an overturning unit 40 formed by overturning pliers such as that shown in figures 4 and 5. Once the sole is arranged in the correct clamping position, second conveyor belt 29 reverses back its motion. Obviously, during this step all the conveyors upstream belt 29 temporarily stop.

It may be particularly advantageous to make the second conveyor belt 29 of a light transparent material to allow the sole to be lit up from the downside. In this way the sole can be imaged independently from the color and the eventual presence of two soles, in which case belt 29 reverses the motion, without activating overturning unit 30, to discharge these soles in a side collection basket or a recirculation belt not shown.

If high soles are used, i.e. having a significant thickness, it is possible that they be set on a side. In order to turn them by 90° an air jet acting on a face of the sole can be provided in cooperation with an abutment acting on the opposite face as an hinge to turn the sole under the pushing action of the air jet.

Imaging station 38 comprises a camera for detecting the orientation of the sole with respect to a reference plane (substantially, the center of gravity and the inclination of the longitudinal axis of the sole) to allow robotic arm 35 to clamp the sole. In order to light up the sole from the downside in the imaging station 38 fourth belt conveyor 33 is made of a light transparent material.

Buffer unit 30 of the soles reduced into alignment ensures a regular sole feeding to robotic arm 35, and, therefore, to trimming machine 36 because it always maintains a suitable number of waiting soles thus balancing the dead times due to the motion reversion of second belt 29. The operation of walls 32 can be performed by pneumatic actuators controlled by sensors, for example photoelectric cells, for detecting the presence of a sole. More precisely, as soon as a sole passes in correspondence to a photoelectric cell situated near wall 32a, the latter slides downward and blocks the forward movements of the sole despite the movement of belt 31. If other two soles are quickly conveyed by belt 29, the same thing occurs for walls 32b and 32c. The movement of the belt is intermittent and starts when robotic arm 35 is ready for handling a sole, while walls 32a, b, c are opened to feed the sole held by wall 32a to fourth belt 33 and to advance by one position those held by walls 32b and 32c.

A further conveyor 41, for example a belt conveyor, runs in a crosswise direction from the operator post 42 to collect the trimmed soles into baskets and discharge them on a main conveyor 43 of the baskets coming from other trimming machines for transferring the soles to further processing or to storage.

In order to reconstruct the reference profile of the sole which robotic arm 35 must handle, the same system as previously described can be followed or a probe device can be used for a first manual detection of the profile and a laser device (for example a laser displacement sensor) associated to the trimming machine for a precise measurement of the coordinates of the profile close to the trimming position thus amending possible errors made in the manual acquisition step.

For the manual detection of the profile with the probe the procedure is as follows.
- The sole is grasped by the robotic arm with the same clamping tool necessary for trimming and is brought in a reference position below the probe. The probe is obviously mounted on board of the trimming machine and is correctly referred with respect to the various coordinate systems of the robot.
- A manual probing of the profile of a reference sole with a constant sampling frequence acquisition is carried out, the sole being previously carefully trimmed by hand. The data obtained in this way consist of the three spatial coordinates of the crest corresponding to the fin cutting line. The points thus obtained are in general very dense and affected by a noise which would make impossible a correct reconstruction of the rotational coordinates to be sent to the robot for the trimming. Therefore it is necessary to process the obtained signal. By means a processing software of the known type for a person skilled in the art, the rough data coming from the probe undergo the following treatments:

- translation from the original format (for example, ISO if acquired from a numerical control machine);
- removal of the final probing points overlapping the initial ones;
- removal of the quasi-coincident points due to a low probing velocity at the high curvature sections;
- filtering of the tri-dimensional components obtained by discrete Fourier transform and convolution product with a filter able to obtain the proper profile softness thanks to an iterative process using parameters controlled by the user;
- calculation of the angular coordinates of the softened profile to be supplied to the robot;
- further selection of the points to be sent to the robot so as to maintain many points of the profile at the high curvature sections.

After the data are sent to the machine, the robot is in condition to carry out a trimming cycle which, however, is still affected by errors depending on the skill of the probing operator or by an improper robot calibration. In order to eliminate these errors, an automatic profile detection is used through a laser device which allows the distance between the laser source and the point of the surface hit by the ray to be measured.

By using the three coordinates of the points forming the profile and both tangent and perpendicular versors with respect to the trajectory in each point of the trimming cycle, the sole is brought before the laser in such a way that the laser beam falls inside the profile on a line perpendicular to the profile and passing through a trimming point. By following the perpendicular line and moving toward the outside of the trimming profile the set of three coordinates of minimum distance corresponding to the crest can be identified.

In order to further increase the precision of the measurement of the height of the profile, the sole is rotated before the laser and a new side scanning is carried out to measure with higher precision the height of the profile at each point.

The data are at this point processed again to reconstruct a more accurate profile.

It is clear that, as the sole trimming time is in the range of ten second, a group of automatic trimming apparatuses in parallel will have to be provided for each molding unit. In this case each apparatus may be equipped with a respective single sole feeding device or may be equipped with a common feeding device for sorting the soles to each of the apparatuses of the group.

Single sole feeding apparatuses different from that described above can be provided without departing from the scope of the invention. In particular it must be pointed out that the configuration of the apparatus according to the present invention has been designed to be associated to the actual sole molding plants without any modification thereof. As an alternative, it is possible to directly feed the soles one by one by the device for the automatic drawing of the soles from the respective molds, possible with an intermediate belt conveyor between the drawing device and the transport means of the turnable or linear type.

Further variations and/or modifications can be brought to the automatic apparatus for trimming shoe soles made of plastic material according to the present invention, without departing from the scope of the invention as set forth in the attached claims.

## Claims

1. Apparatus for the automatic trimming of shoe soles made of plastic material, comprising a trimming machine (12,36) which includes a support member, along which the sole edge to be trimmed is made to slide, and a cutting tool reciprocating to and from said support in a substantially radial direction with respect thereto, characterized in that it further comprises means for transporting the soles (3,29,30,33) one by one toward an imaging and clamping station (5,34) for said soles, imaging means (6,37,38) for detecting the disposition of each of said soles in said imaging station and transmitting the data relevant to the disposition of the soles to a data processing unit (14,39), sole clamping means (10,35) operated each time by an enabling signal coming from said processing unit as a function of the sole disposition within said imaging and clamping station, said sole clamping means being capable of transferring the sole to an operative position with respect to said trimming machine and comprising a clamping tool (11) for performing a 360° rotation in said operating position around its axis according to a trajectory defined on the basis of a sole reference profile so as to slide the overall sole edge to be trimmed under the cutting tool of the trimming machine.

2. Apparatus according to claim 1, wherein said clamping means (10,35) comprise a robotic arm.

3. Apparatus according to claim 1 or 2, wherein upstream of said imaging and clamping station, sole overturning means (15,40) are provided, said sole transport means being capable of performing a backward motion from said imaging and clamping station (5,34) toward said overturning means (15,40) as a consequence of an enabling signal coming from said data processing unit generated each time the imaging unit (6,37) detects a sole which is not disposed in a proper way for being clamped.

4. Apparatus according to claim 3, wherein said overturning means (15) comprise a pliers member capable of performing an angular displacement of 180° around its own axis and an alternate translation above said sole transport means (3,29).

5. Apparatus according to claim 2, wherein said robotic arm comprises a sole clamping tool (11) formed by two coplanar plates (12a, 12b) movable with respect to each other and defining, when they are fully flanked, a seat (14) having a shape substantially equal to that of a heel, the deepness of said seat decreasing from its rear end, said plates further defining an abutment surface (14a) for the fore part of the sole extending from the side opposite to said rear end of said seat.

6. Apparatus according to any of the previous claims, further comprising sole feeding means (2,26,27,28) for feeding the soles one by one to said transport means (3,29,30,33) from a storage (1,25) where they are collected in bulk.

7. Apparatus according to claim 6, wherein said sole feeding means (2,26,27,28) comprise an inclined belt conveyor (19) fed by said sole storage (1,25) comprising a row of steps (21) integral to said belt and defining a series of seats for containing no more than one sole, said steps cooperating with fixed diaphragms (22) for preventing the accumulation of more than one sole in each seat.

8. Apparatus according to the claims 1 or 2, wherein said means for transporting the soles one by one comprise a movable plane (3) intermittently passing through said imaging and clamping station.

9. Apparatus according to claim 8, wherein said movable plane is a table turnable with respect to a central axis provided with guide means (7) to direct the soles toward said imaging and clamping station (5).

10. Apparatus according to claim 9, wherein said turnable table comprises further guide means (8), located downstream of said imaging and clamping station, to direct the improperly disposed soles toward a discharge station (9).

11. Apparatus according to any of the claims 1 to 7, wherein said means for transporting the soles one by one toward said imaging and clamping station (34) of said soles comprise linear conveyor means comprising a buffer conveyor (30) formed by a movable transport plane (31) and a plurality of walls (32a,b,c...) perpendicular to it and movable to and from it for preventing/allowing the passage of the soles, said linear transport means further comprising, upstream of said buffer conveyor (30), a further conveyor (29) receiving the soles from said sole feeding means (26,27,28) and able to reverse its forward motion as a result of an enabling signal produced by a device (37) for detecting the disposition of the sole passing thereon and associated to said further conveyor (29).

12. Apparatus according to claim 11, wherein said linear transport means further comprise a sole conveyor (33) downstream of said buffer conveyor (30) for feeding the soles to said imaging and clamping station (34).

13. Apparatus according to claims 11 or 12, wherein said feeding means comprise an elevator belt (27) for reducing into an alignment the soles coming from a first conveyor (26) fed by a loading hopper (25), a chute (28) for feeding the soles to said buffer conveyor (30) being further provided.

14. Apparatus according to any of the previous claims, comprising a probing device for the manual acquisition of the spatial coordinates of a profile of a manually trimmed reference sole, said profile corresponding to said edge to be trimmed.

15. Apparatus according to any of the previous claims, further comprising a laser device for the automatic acquisition of a profile of a manually trimmed reference sole, said profile corresponding to said edge to be trimmed.

16. Method for trimming shoe soles made of plastic material by means of a robotic arm (10,35) comprising a clamping tool (11) which clamps a sole from a unit (6,34) for imaging its disposition and transports it to a sole trimming machine (12,36) comprising a trimming tool, characterized in that it comprises the following steps:
- reconstructing a reference profile of a model-sole representative of the soles of a given shape and/or size through at least one of two different views of said model-sole to acquire the coordinates of a sufficient number of points of said profile;
- calculating the trajectory of the robotic arm in the trimming station starting from said reconstructed profile;
- feeding a sole of the same type as said model-sole to the imaging station;
- detecting the disposition of the sole in said imaging station and, if the sole is disposed in a way proper for being clamped, providing an enabling signal to said robotic arm;
- grasping said sole by means of said clamping tool (11);
- transferring the sole grasped by the clamping tool to said trimming station;
- moving the sole with respect to said trimming tool according to said trajectory to remove the fin protruding from the edge thereof.

17. Method according to claim 16, wherein the reconstruction of the reference profile of a model-sole comprises the following steps:
- acquiring the coordinates of N points of the outer edge of each view of said model-sole in said imaging station;
- partitioning into blocks the matrix 2xN containing the X,Y coordinates of said points;
- drawing a Bezier curve for each block and calculating the relevant tangents;
- repeating the previous step a number of times equal to the number of points of each partition on points translating forward each time by one position;
- working out the average of the results obtained in this way.

18. Method according to claim 16, wherein, if the disposition of the sole detected in said imaging station is unsuitable for being clamped, a recirculation step of the sole to a sole collection storage (1) is provided.

19. Method according to claim 16, wherein, if the disposition of the sole in said imaging station is suitable for being clamped, a sole transfer step is provided in which the sole is conveyed to an overturning station (15,40) upstream of said imaging station, in which the sole is overturned and directed again to said imaging station.
